# EUROPÄISCHE PATENTSCHRIFT

(11) **EP 0 790 590 B1**
(45) Veröffentlichungstag und Bekanntmachung des Hinweises auf die Patenterteilung: **14.05.2003**
(21) Anmeldenummer: 97101921.1
(22) Anmeldetag: 06.02.1997
(51) Int. Cl.: G08B 29/04, G07F 7/10

(54) **Infrarot-Sicherungssystem**
Infrared security system
Système de sécurité à infrarouge

(30) Priorität: 12.02.1996 DE 19605102
(43) Veröffentlichungstag der Anmeldung: 20.08.1997
(73) Patentinhaber: Wincor Nixdorf International GmbH, 33106 Paderborn (DE)
(72) Erfinder: Lutz, Bernhard, 33129 Delbrück (DE)

(56) Entgegenhaltungen:
- EP-A- 0 499 177
- EP-A- 0 580 297
- US-A- 4 340 150
- PATENT ABSTRACTS OF JAPAN vol. 096, no. 003, 29.März 1996 & JP 07 307108 A (KAWASHIMA KOKI KK), 21.November 1995,

## Beschreibung

### Technisches Gebiet

Die Anordnung betrifft den Schutz von insbesondere Selbstbedienungssystemen gegen Manipulationen durch Überbauten.

### Stand der Technik

Automaten wie Selbstbedienungssysteme und Geldausgabeautomaten unterliegen zunehmend Angriffen durch nicht autorisierte Benutzer, mit dem Ziel, unberechtigt Zugang zu den Leistungen des Automaten zu erlangen. Hierzu sind sogenannte "Vorbauten" bekannt geworden, bei denen beispielsweise vor einen Kartenleser eine Atrappe gesetzt wird, welche die Karte unberechtigterweise einbehält.

Es wurden lichtelektrische Sensoren in der Oberfläche der Geräte vorgeschlagen, die bei Abdeckung ein Signal auslösen, welches Bedienpersonal alarmiert und das Gerät deaktiviert. Dabei wurde die Umgebungshelligkeit ausgenutzt oder für jeden Sensor nach der Art einer Lichtschranke ein Geber vorgesehen. Diese Anordnungen sind jedoch entweder nicht ausreichend betriebssicher oder bei einer großen Anzahl von Sensoren zu aufwendig.

In der Druckschrift EP 580 297 A2 wird ein Sicherungssystem für Geldautomaten beschrieben, das über Bewegungsmelder und elektrische Felder eine unzulässige Bewegung entdecken soll.

In der Druckschrift EP 499 177 A1 wird ein Infrarot-Einbruchsmelder beschrieben, der über eine Infrarot-Lichtquelle verfügt, wobei die Unterschiede der Strahlung der Lichtquelle zu der von einer Person ausgestrahlten ausgewertet wird.

Aufgabe der Erfindung ist es daher, eine einfache Anordnung anzugeben, die nachträglich an den Automaten angebrachte Objekte zuverlässig erkennt.

Diese Aufgabe wird dadurch gelöst, daß in der Oberfläche des zu schützenden Geräts Infrarot-Sensoren angeordnet sind, die von einer intermittierend betriebenen Infrarot-Strahlungsquelle beaufschlagt werden.

### Kurzbeschreibung der Zeichnungen

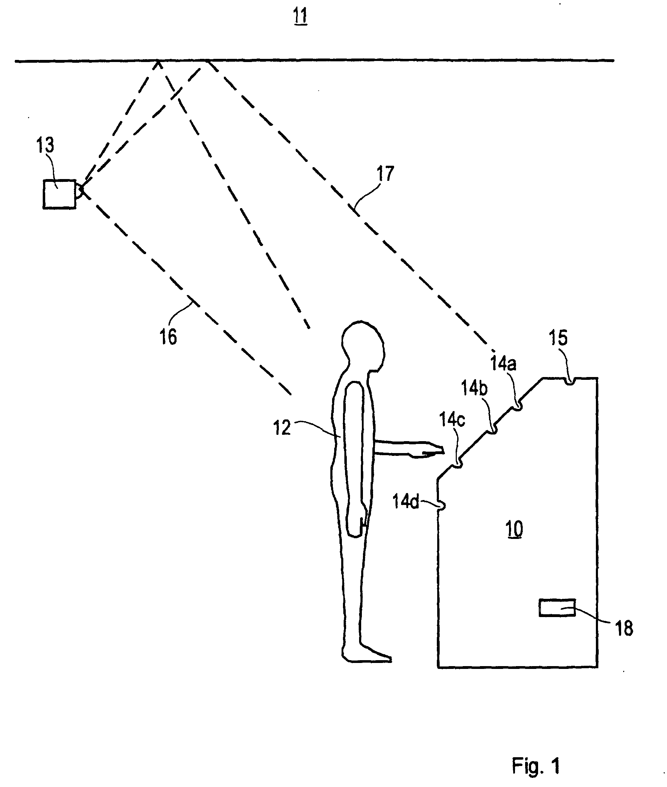

Es zeigt
- Fig. 1: eine schematisch Anordnung eines Geräts in einem Raum mit einer Bedienperson.

### Detaillierte Beschreibung der Erfindung

In Fig. 1 ist schematisch ein Gerät 10 dargestellt, welches sich in einem Raum befindet, von dem lediglich die Decke 11 angedeutet ist. Ferner ist eine Bedienperson 12 angedeutet. Eine Strahlungsquelle 13 strahlt mittels direkter Strahlen 16 und mittels indirekter, an der Decke 11 reflektierter Strahlen 17 zu dem Gerät 10. Indirekte Strahlung ist in Räumen mit geringer Deckenhöhe sinnvoll, in denen durch direkte Strahlung keine ausreichende Überdeckung erreicht wird. Auf oder kurz unter der Oberfläche des Geräts 10 befinden sich ein Referenzsensor 15 und verschiedene Arbeitssensoren 14a..d, welche über nicht gezeigte Verbindungen mit einer Auswerteelektronik 18 verbunden sind.

Bei der Strahlungsquelle handelt es sich um einen intermittierend strahlenden Infrarotsender. Dieser ist beispielsweise eine handelsübliche Xenon-Blitzröhre, die mit einem Infrarotfilter versehen ist. Beispielsweise alle 10 sec wird ein Blitz ausgelöst. Dies kann wahlweise von der Auswerteelektronik 18 veranlaßt werden oder autonom erfolgen. Die Strahlungsquelle 13 wird vorzugsweise in eine Atrappe in der Form einer Video-Überwachungskamera eingebaut. Auch in diesem Fall ist eine zusätzliche indirekte Strahlung sinnvoll, weil die Atrappe so angebracht sein muß, daß eine Verwendung als Videokamera plausibel ist.

Zur Verbesserung der Überwachungsdichte werden in einer Weiterbildung mehrere synchron ausgelöste Strahlungsquellen verwendet. Dies erfolgt entweder durch direkte Verbindung der Strahler mit einem zentralen Zeitgeber oder durch Verwendung eines autonom arbeitenden Mutterstrahlers und, nach Art der Tochterblitzgeräte, mit Sensoren in den Folgestrahlern, die durch den intensiven Lichtimpuls des Mutterstrahlers ausgelöst werden.

Insbesondere für den Fall der autonomen Auslösung ist in dem Gerät ein Referenzsensor 15 vorgesehen, der ein Freigabesignal für die Auswertung der Arbeitssensoren 14a..d erzeugt. Anstelle dessen ist auch eine Koinzidenzschaltung möglich, die den Lichtimpuls in einen elektrischen Impuls umwandelt, die elektrischen Impulse aller Sensoren durch eine Oder-Schaltung zu einem Übernahmeimpuls und durch eine Und-Schaltung zu einem Freigabeimpuls verknüpft, welcher durch den Übernahmeimpuls in einen Speicher übernommen wird. Dieses Signal wird nach einer beendeten Transaktion durch die Bedienperson ausgewertet, um das Gerät für die nächste Transaktion freizuschalten. Bleibt das Freigabesignal aus, so wird das Gerät gesperrt und Wartungspersonal benachrichtigt.

Die Sensoren sind infrarotempfindliche Bauelemente ausreichender Ansprechgeschwindigkeit, wie sie durch Fotodioden oder Fototransistoren gegeben sind. Diese werden möglichst unauffällig in der Oberfläche untergebracht. Es sind schwarze Pigmente bekannt, die eine nicht zu dicke Kunststoffschicht für sichtbares Licht praktisch undurchsichtig machen und dennoch infrarotes Licht durchlassen. Daher können die Sensoren unauffällig unter der Oberfläche angeordnet werden.

In einer Variante der Erfindung wird der Referenzsensor 15 für sichtbares Licht ausgelegt und steuert die Empfindlichkeit der Auswertesensoren 14a..d, da bei starker Beleuchtung mit sichtbarem Licht die Auswerteverstärker nach den Fotodioden oder -transistoren übersteuert werden könnten. Der Referenzsensor wird vorzugsweise an einer Stelle eingebaut, an der die Anbringung eines Vorbaus unwahrscheinlich ist.

## Patentansprüche

1. Anordnung zur Erkennung der Abwesenheit von Gegenständen, die vor Bedienelementen einer elektronischen Einrichtung eines frei zugänglichen Geräts angebracht werden können, **gekennzeichnet durch**
- eine Infrarot-Strahlungsquelle in einem eigenen, von dem Gerät (10) entfernt angeordneten Gehäuse, die intermittierende Lichtimpulse (16, 17) ausstrahlt, die zumindest bei Abwesenheit einer die Bedienelemente bedienenden Person (12) auf die Bedienelemente und ihre nähere Umgebung fallen, und
- Infrarot-Sensoren (14a, 14b, 14c, 14d) für die Lichtimpulse (16, 17) und eine Auswerteschaltung wobei die Infrarot-Sensoren in der Oberfläche des Geräts nahe den Bedienelementen angebracht sind und mit der Auswerteschaltung verbunden sind, und
- wobei die Auswerteschaltung mit der elektronischen Einrichtung derart verbunden ist, dass das Eintreffen der Lichtimpulse (16, 17) die Bedienelemente freigibt.

2. Anordnung nach Anspruch 1, wobei weitere Infrarot-Strahlungsquellen der gleichen Art wie die erste durch die Lichtimpulse der ersten ausgelöst werden.

3. Anordnung nach einem der der vorhergehenden Ansprüche, wobei die Strahlungsquellen Blitzröhren, vorzugsweise mit Xenon-Füllung, sind, denen ein Infrarotfilter vorgeschaltet ist.

4. Anordnung nach einem der der vorhergehenden Ansprüche, wobei ein Sensor als Referenzsignalgeber dient und beabstandet von den Bedienelementen angebracht ist.

5. Anordnung nach einem der vorhergehenden Ansprüche, wobei als Gehäuse mindestens einer Infrarot-Strahlungsquelle das Gehäuse einer Videokamera oder eine die wesentlichen Konstruktionsmerkmale einer solchen umfassende Nachbildung davon dient.

6. Anordnung nach einem der vorhergehenden Ansprüche, wobei mindestens eine Strahlungsquelle so angebracht ist, daß ein Teil der Strahlung von den Wänden oder der Decke reflektiert wird und dann auf mindestens einen Sensor trifft.

7. Anordnung nach einem der vorhergehenden Ansprüche, wobei alle Sensoren mit einer gemeinsamen Auswerteschaltung verbunden sind, welche durch eine Koinzidenzschaltung nur gleichzeitig eintreffende Lichtimpulse berücksichtigt.

8. Anordnung nach einem der vorhergehenden Ansprüche, wobei mindestens ein Sensor unter einer infrarot-durchlässigen Oberfläche, vorzugsweise aus gefärbtem Kunststoff, unsichtbar angebracht ist.

9. Anordnung nach einem der vorhergehenden Ansprüche, wobei die Auswerteeinheit bei einer Sperrung der Bedienelemente ein Signal an ein Wartungspersonal gibt.

10. Anordnung nach einem der vorhergehenden Ansprüche, wobei die Lichtimpulse in einem zeitlichen Abstand zwischen 1 sec und 60 sec ausgesendet werden.

11. Verfahren zum Betrieb einer Anordnung nach Anspruch 1 an einem Gerät, welches abwechselnd Benutzungs- und Pausenphasen hat, in welchen letzteren die Oberfläche des Geräts frei zugänglich ist, **dadurch gekennzeichnet, dass** das Eintreffen der Lichtimpulse während der Pausenphasen ausgewertet und während der Betriebsphasen nicht ausgewertet wird.

## Claims

1. Arrangement for detecting the absence of objects which can be fitted in front of operating elements of an electronic device of a freely accessible apparatus, **characterized by**
- an infrared radiation source in a dedicated housing arranged remotely from the apparatus (10), which emits intermittent light pulses (16, 17) which fall onto the operating elements and their immediate surroundings at least in the absence of a person (12) operating the operating elements, and
- infrared sensors (14a, 14b, 14c, 14d) for the light pulses (16, 17) and an evaluation circuit, the infrared sensors being fitted in the surface of the apparatus near the operating elements, and being connected to the evaluation circuit, and
- the evaluation circuit being connected to the electronic device in such a way that the arrival of the light pulses (16, 17) enables the operating elements.

2. Arrangement according to Claim 1, in which further infrared radiation sources of the same type as the first infrared radiation source are triggered by the light pulses of the first infrared radiation source.

3. Arrangement according to one of the preceding claims, the radiation sources being flashtubes, preferably with a xenon filling, upstream of which an infrared filter is connected.

4. Arrangement according to one of the preceding claims, in which a sensor serves as reference signal transmitter and is fitted at a spacing from the operating elements.

5. Arrangement according to one of the preceding claims, in which serving as housing of at least one infrared radiation source is the housing of a video camera or a simulation thereof comprising the essential design features of such a camera.

6. Arrangement according to one of the preceding claims, in which at least one radiation source is fitted such that a portion of the radiation is reflected by the walls or the ceiling, and then strikes at least one sensor.

7. Arrangement according to one of the preceding claims, in which all the sensors are connected to a common evaluation circuit which takes account only of simultaneously arriving light pulses by means of a coincidence circuit.

8. Arrangement according to one of the preceding claims, in which at least one sensor is fitted invisibly under an infrared-transmissive surface, preferably made from coloured plastic.

9. Arrangement according to one of the preceding claims, in which the evaluation unit sends a signal to maintenance staff upon blockage of the operating elements.

10. Arrangement according to one of the preceding claims, in which the light pulses are emitted at a time interval of between 1 sec and 60 sec.

11. Method for operating an arrangement according to Claim 1 on a unit which alternately has use phases and pause phases, in which latter the surface of the unit is freely accessible, **characterized in that** the arrival of the light pulses is evaluated during the pause phases, and is not evaluated during the operating phases.

## Revendications

1. Dispositif pour la détection de la présence d'objets qui peuvent être placés devant des éléments de commande d'un dispositif électronique d'un appareil à accès libre, **caractérisé par**
- une source de rayonnement infrarouge qui se trouve dans un boîtier particulier disposé à distance de l'appareil (10) et qui émet des impulsions lumineuses intermittentes (16, 17) qui arrivent, au moins en l'absence d'une personne (12) utilisant les éléments de commande, sur les éléments de commande et leur environnement proche, et
- des capteurs infrarouges (14a, 14b, 14c, 14d) pour les impulsions lumineuses (16, 17) et un circuit d'exploitation, les capteurs infrarouges étant placés dans la surface de l'appareil près des éléments de commande et étant reliés au circuit d'exploitation, et
- le circuit d'exploitation étant relié au dispositif électronique de telle sorte que l'arrivée des impulsions lumineuses (16, 17) libère les éléments de commande.

2. Dispositif selon la revendication 1, dans lequel d'autres sources de rayonnement infrarouge du même type que la première sont déclenchées par les impulsions lumineuses de la première.

3. Dispositif selon l'une des revendications précédentes, dans lequel les sources de rayonnement sont des flashs, de préférence au xénon, du côté amont desquels est branché un filtre infrarouge.

4. Dispositif selon l'une des revendications précédentes, dans lequel un capteur sert de transmetteur de signal de référence et est placé à distance des éléments de commande.

5. Dispositif selon l'une des revendications précédentes, dans lequel on utilise comme boîtier d'au moins une source de rayonnement infrarouge le boîtier d'une caméra vidéo ou une copie de celui-ci présentant les caractéristiques de construction essentielles de celle-ci.

6. Dispositif selon l'une des revendications précédentes, dans lequel au moins une source de rayonnement est placée de telle sorte qu'une partie du rayonnement est réfléchie par les murs ou le plafond et arrive ensuite sur au moins un capteur.

7. Dispositif selon l'une des revendications précédentes, dans lequel tous les capteurs sont reliés à un circuit d'exploitation commun qui ne prend en compte au moyen d'un circuit de coïncidence que des impulsions lumineuses arrivant simultanément.

8. Dispositif selon l'une des revendications précédentes, dans lequel au moins un capteur est placé, invisible, sous une surface laissant passer les rayons infrarouges, de préférence en un plastique coloré.

9. Dispositif selon l'une des revendications précédentes, dans lequel l'unité d'évaluation lors d'un blocage des éléments de commande donne un signal au personnel de surveillance.

10. Dispositif selon l'une des revendications précédentes, dans lequel les impulsions lumineuses sont émises à des intervalles temporels compris entre 1 s et 60 s.

11. Procédé pour faire fonctionner un dispositif selon la revendication 1 pour un appareil qui a alternativement des phases d'utilisation et des phases de pause, la surface de l'appareil étant librement accessible dans ces dernières, **caractérisé par le fait qu'**on évalue l'arrivée des impulsions lumineuses pendant les phases de pause et qu'on ne l'évalue pas pendant les phases d'utilisation,
